# EUROPEAN PATENT APPLICATION

(11) **EP 2 230 470 A2**
(43) Date of publication of application: **22.09.2010**
(21) Application number: 10157235.2
(22) Date of filing: 22.03.2010
(51) Int. Cl.: F24J 3/08, F25B 30/06

(54) **Heat Exchange System**

(30) Priority: 20.03.2009 US 161948 P
(71) Applicant: Renewable Resource Recovery Corp., Sudbury Ontario P3A 4R7 (CA)
(72) Inventor: Naneff, Boris P., Sudbury Ontario P3A 4R7 (CA); Mancini, Robert, Bolton Ontario L7E 5A1 (CA); Lisk, Leslie J., Coniston Ontario P0M 1M0 (CA); Hood, John D., Sudbury Ontario P3A 4X4 (CA)
(74) Representative: Bartelds, Erik

(57) **Abstract**

A heat exchange system (20) including a heat pump assembly (22) for controlling an indoor fluid's temperature having a heat exchanger (24) with a heat exchange fluid (26) circulatable therein and one or more elongate pipe bodies (28) defining one or more conduits (30) therein in which a fluid (32) is receivable. The system includes one or more ground loop circuits (38) through which a heat transfer medium (42) is circulated. The ground loop circuit (38) includes one or more pipe portions (46) at least partially engaged with the pipe body (28). The pipe portion (46) is at least partially located proximal to the conduit (30) for heat exchange between the fluid in the conduit and the heat exchange medium in the pipe portion (46), and the pipe portion (46) is at least partially located proximal to the exterior surface (34) for heat exchange between the ground material and the heat exchange medium in the pipe portion (46).

## Description

### FIELD OF THE INVENTION

The present invention is a heat exchange system including one or more pipe assemblies.

### BACKGROUND OF THE INVENTION

Heat pumps, and in particular geothermal heat pumps, are well known in the art. In general, geothermal heat pumps are adapted to draw energy from shallow ground, i.e., energy from the sun which is stored in the ground. The shallow ground is used as a heat source (i.e., when the heat pump is used to provide heat to an indoor space in a building), or a heat sink (i.e., when the heat pump is operating to cool the indoor space), as is known.

Various geothermal heat pump systems are known. However, the known heat pump systems have a number of disadvantages. In particular, only the shallow ground is used as a heat source or a heat sink, in the typical geothermal heat system.

### SUMMARY OF THE INVENTION

There is therefore a need for a heat exchange system which addresses or mitigates one or more of the disadvantages of the prior art.

In its broad aspect, the invention provides a heat exchange system including a heat pump assembly for controlling an indoor fluid's temperature with a heat exchanger having a heat exchange fluid circulatable therein, and one or more elongate pipe bodies. Each pipe body defines one or more conduits therein in which one or more fluids are receivable. The pipe body has an exterior surface adapted for engagement with ground material. The heat exchange system also includes one ore more ground loop circuits in fluid communication with one or more pumps, for circulating a heat transfer medium through the ground loop circuit. Each ground loop circuit includes: one or more end portions positioned proximal to the heat exchanger for heat exchange between the heat transfer medium in the end portion and the heat exchange fluid in the heat exchanger; one or more pipe portions, each being at least partially engaged with one of the pipe bodies; and one or more connecting portions connecting the pipe portions and the end portion. Each pipe portion being at least partially located proximal to the conduit for heat exchange between said the fluid in the conduit and the heat exchange medium in the pipe portion. Also, the pipe portion is at least partially located proximal to the exterior surface for heat exchange between the ground material and the heat exchange medium in the pipe portion.

In another aspect, the connecting portion is at least partially engaged with the ground material for heat exchange between the ground material and the heat exchange medium in the connecting portion.

In yet another aspect, the invention includes a plurality of pipe bodies connected end-to-end for substantial alignment of the conduits therein, each pipe body being connected to at least an adjacent one of the pipe bodies, and a plurality of pipe portions, each pipe portion being at least partially engaged with one of the pipe bodies respectively. The pipe portions are connected to form a plurality of groups, each group including at least a first selected one of the pipe portions engaged with a first selected one of the pipe bodies connected in series to at least a second selected one of the pipe portions engaged with a second selected one of the pipe bodies adjacent thereto. Each group of the pipe portions is respectively connected to the connecting portion in parallel.

The connecting portion includes one or more manifolds for receiving the heat exchange medium from each group of the pipe portions respectively at substantially the same pressure, to permit the heat exchange medium to flow into the manifold from the groups at substantially equal rates of flow.

The heat exchange system may additionally include one or more supplemental loop circuits in which a supplemental heat exchange medium is circulatable, for heat exchange between the supplemental heat exchange medium and the heat exchange fluid in the heat exchanger.

In another aspect, the pipe body comprises reinforced concrete.

The invention also includes a pipe assembly including a pipe body defining one or more conduits therein in which one or more fluids is receivable, the pipe body having an exterior surface adapted for engagement with ground material. The pipe assembly also includes one or more pipe portions through which a heat transfer medium is circulatable. The pipe portion is at least partially engaged with the pipe body and at least partially located proximal to the conduit for heat exchange between the fluid in the conduit and the heat exchange medium in the pipe portion. The pipe portion is at least partially located proximal to the exterior surface for heat exchange between the heat exchange medium in the pipe portion and the ground material.

In another aspect, the pipe portion includes an embedded part positioned in the pipe body. The pipe body includes an internal wall portion positioned between the embedded part and the conduit, the internal wall portion being adapted for thermal conductivity therethrough. The pipe body also includes an external wall portion which includes the exterior surface and is positioned between the embedded part and the ground material, the external wall portion being adapted for thermal conductivity therethrough.

### BRIEF DESCRIPTION OF THE DRAWINGS

The invention will be better understood with reference to the drawings, in which:

Fig. 1 is an isometric view of an embodiment of a heat exchange system of the invention;

Fig. 2 is a side view of a portion of the heat exchange system of Fig. 1, drawn at a larger scale;

Fig. 3A is a cross-section of a portion of the heat exchange system of Fig. 2, drawn at a larger scale;

Fig. 3B is a cross-section of an embodiment of a pipe assembly of the invention, drawn at a larger scale;

Fig. 4 is a schematic diagram of another embodiment of the heat exchange system of the invention, drawn at a smaller scale;

Fig. 5A is a cross-section of an embodiment of the pipe assembly of the invention, drawn at a larger scale;

Fig. 5B is a cross-section of an alternative embodiment of the pipe assembly of the invention;

Fig. 6 is a schematic diagram of another embodiment of the heat exchange system of the invention; and

Fig. 7 is a schematic diagram of an alternative embodiment of the heat exchange system of the invention;

Fig. 8A is a schematic diagram of another embodiment of the heat exchange system of the invention;

Fig. 8B is a schematic diagram of a portion of the heat exchange system schematically represented in Fig. 8A;

Fig. 9 is a schematic diagram of another embodiment of the heat exchange system of the invention; and

Fig. 10 is a flow chart schematically illustrating an embodiment of a method of the invention.

### DETAILED DESCRIPTION

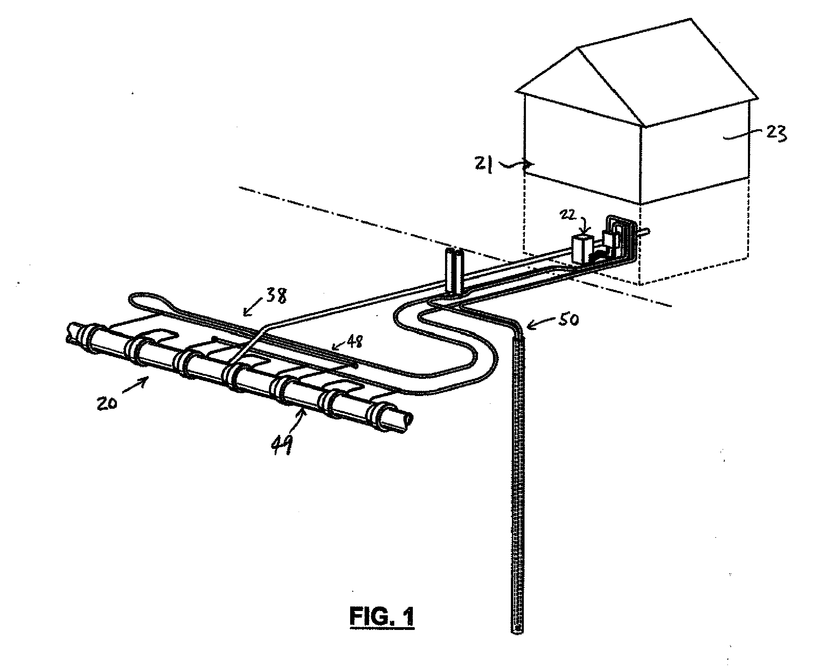

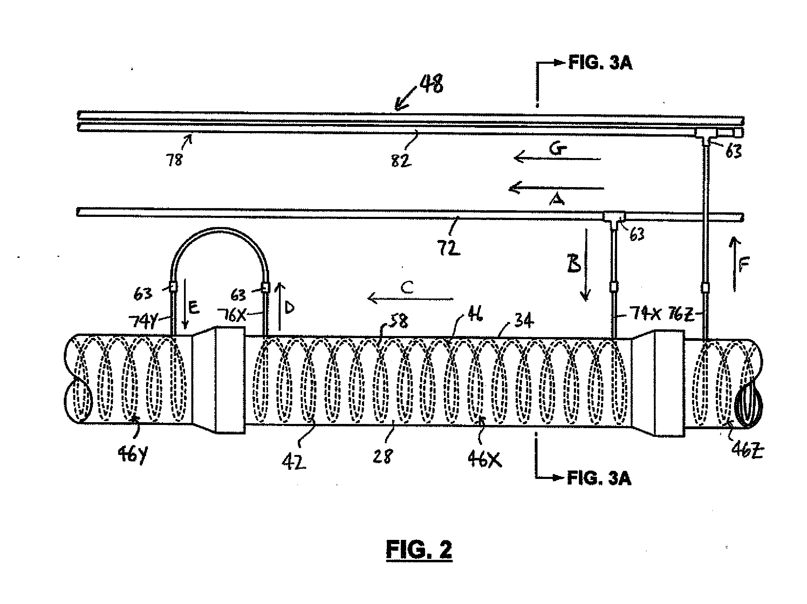

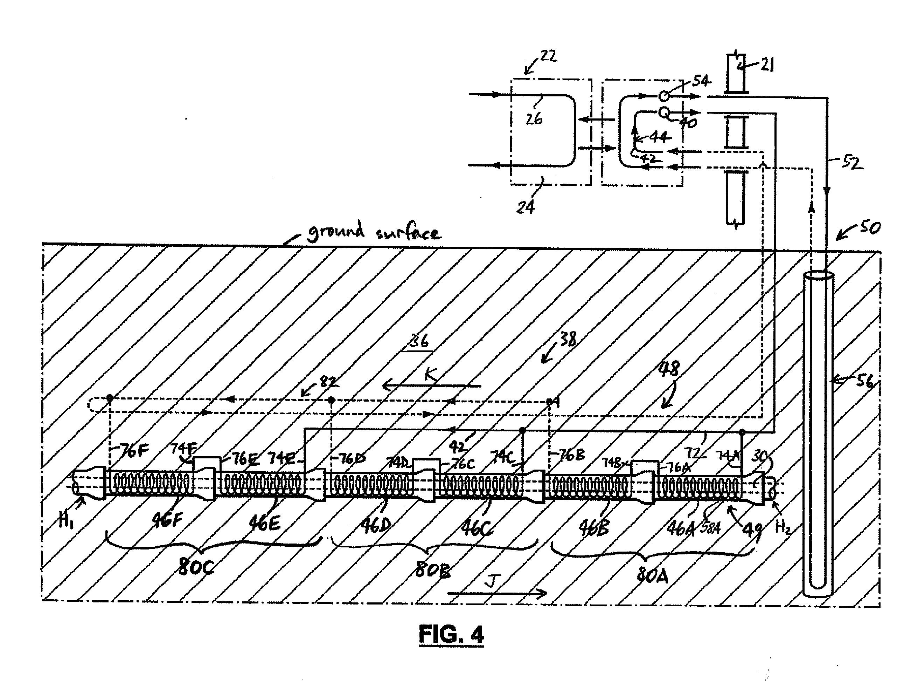

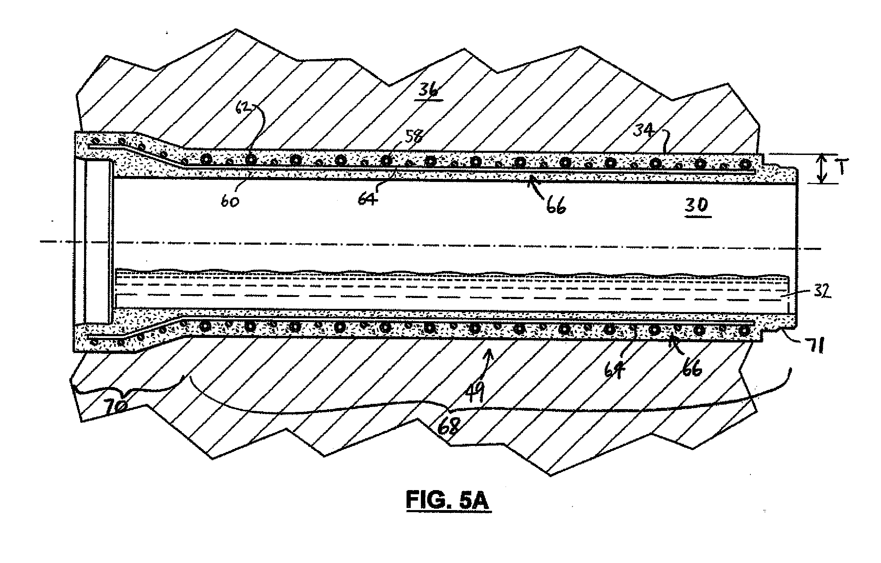

In the attached drawings, like reference numerals designate corresponding elements throughout. Reference is first made to Figs. 1-5A to describe an embodiment of a heat exchange system 20 of the invention. In one embodiment, the heat exchange system 20 includes a heat pump assembly 22 for controlling an indoor fluid's temperature having a heat exchanger 24 with a heat exchange fluid 26 circulatable therein (Fig. 4). Preferably, the heat exchange system 20 includes one or more elongate pipe bodies 28, each pipe body 28 defining one or more conduits 30 therein in which one or more fluids 32 are receivable (Figs. 2, 3B, 5A). Each pipe body 28 also includes an exterior surface 34 which is adapted for engagement with ground material 36. In one embodiment, the heat exchange system 20 preferably also includes one or more ground loop circuits 38 in fluid communication with one or more pumps 40 (Fig. 4), for circulating a heat transfer medium 42 through each ground loop circuit 38. As can be seen in Fig. 4, each ground loop circuit 38 preferably includes one or more end portions 44 positioned proximal to the heat exchanger 24 for heat exchange between the heat transfer medium in the end portion 44 and the heat exchange fluid in the heat exchanger 24, as well as one or more pipe portions 46 which are at least partially engaged with the pipe bodies 28 respectively, as will be described. It is preferred that each ground loop circuit 38 also includes one or more connecting portions 48 connecting the pipe portion 46 with the end portion 44. Preferably, each pipe portion 46 is at least partially located proximal to the conduit 30 for heat exchange between the fluid in the conduit and the heat exchange medium in the pipe portion 46, as will also be described. In addition, and as shown in Fig. 5A, the pipe portion 46 is at least partially located proximal to the exterior surface 34 for heat exchange between the ground material and the heat exchange medium in the pipe portion 46.

In one embodiment, each connecting portion 48 preferably is at least partially engaged with the ground material 36 for heat exchange between the ground material and the heat exchange medium in the connecting portion 48.

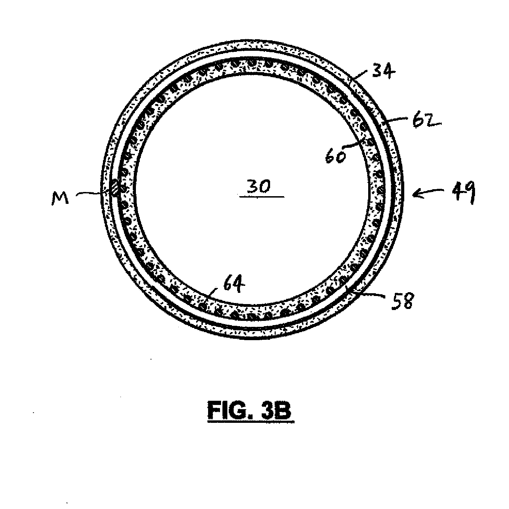

As shown in Figs. 3B and 5A, the invention includes a pipe assembly 49, which preferably includes the pipe body 28 and the pipe portion 46. As can be seen, for example, in Fig. 5A, the pipe portion 46 preferably is at least partially engaged with the pipe body 28 and at least partially located proximal to the conduit 30 for heat exchange between the fluid 32 in the conduit 30 and the heat exchange medium 42 in the pipe portion 46. Preferably, the pipe portion 46 also is at least partially located proximal to the exterior surface 34 for heat exchange between the heat exchange medium 42 in the pipe portion 46 and the ground material 36.

As illustrated in Figs. 1 and 4, the heat exchange system 20 preferably includes the conventional heat pump assembly 22, adapted for controlling the temperature of an indoor fluid 23. For instance, the indoor fluid may be air inside a building 21 (e.g., a residence, or a commercial building). As is well known in the art, in this situation, the heat exchange fluid 26 is used (generally, with heating or cooling elements (not shown)) to heat or cool the air inside the building. For illustrative purposes, the air inside the building 21 is designated 23 in Fig. 1. As is known, a heat pump may distribute the heat by means of a hydronic (hot water) system, e.g., through baseboard radiators or an in-floor hydronic heating system. The system may also be used to heat domestic hot water using a desuperheater installed in the heat pump (i.e., the desuperheater takes the hot water after it leaves the compressor in the heat pump). Excess hot water is available in the heat pump cooling mode and is also available in the heating mode during mild weather when the heat pump is above the balance point and is not working to full capacity. Because the operation of the heat pump assembly 22 in connection with heating and/or cooling the indoor fluid is generally conventional in regard to its heating or cooling of the indoor fluid, it is not necessary to describe such operation in detail. It will be understood that although reference is made to only one heat pump assembly, the invention herein may be used with a number of heat pump assemblies, e.g., such as multiple heat pumps used in a large building.

The conduit in the pipe body preferably is for channelling waste water, i.e., the pipe body preferably is a sewer pipe. The fluid in the conduit is waste water, which may include in fact various liquids and solids. For instance, the sewer pipe may be part of a sanitary sewer or a storm sewer system. As with relatively shallow ground material, the waste water typically is relatively warm in winter and relatively cool in summer (i.e., compared to ambient air), and the temperature differences are exploited in the invention. In summary, depending on (i) the temperatures of the ground material and the fluid in the conduit and (ii) the results intended to be achieved via controlling the indoor fluid's temperature, heat may be transferred to the heat exchange fluid in the heat exchanger from the heat exchange medium in the end portion (i.e., the ground material and the fluid may be used as heat sources), or alternatively, heat may be exchanged from the heat exchange fluid in the heat exchanger to the heat exchange medium in the end portion (i.e., the ground material and the fluid may be used as heat sinks). It will be appreciated by those skilled in the art that the pip body is not necessarily a sewer pipe, and the fluid in the conduit may be any suitable fluid (i.e., a fluid which is relatively warm in winter and relatively cool in summer).

For example, in winter, the ground material to which the pipe portion is proximal is relatively warm, as is the fluid in the conduit. Also, the indoor fluid (e.g., air) typically is required to be warmed from time to time by conventional heating means, supplemented by the heat pump. In this situation, heat is transferred to the heat transfer medium in the pipe portion (i.e., circulated through the loop circuit, including the pipe portion): (a) from the fluid in the conduit; and (b) from the ground material. However, when the warmed heat transfer medium is circulated through the end portion, such heat transfer medium is brought into proximity to the heat transfer fluid, which is circulating through the heat exchanger in the heat pump (Fig. 4). In this situation, heat is transferred from the (relatively warmer) heat transfer medium in the end portion to the (relatively cooler) heat transfer fluid in the heat exchanger, thereby lowering (or eliminating, as the case may be) the extent to which other energy inputs to the conventional HVAC unit are required in order to achieve the desired increase in the indoor space's temperature.

When the indoor fluid is to be cooled (e.g., in summer), the situation is reversed. Heat is transferred from the (relatively warmer) heat transfer fluid in the heat exchanger to the (relatively cooler) heat transfer medium as it is circulated through the end portion of the ground loop circuit. In this situation, heat is transferred from the heat transfer medium: (a) to the ground material, which is cooler than the heat transfer medium; and (b) to the fluid in the conduit, which is also cooler than the heat transfer medium.

It will be appreciated by those skilled in the art that the heat exchange medium is circulated through the ground loop circuit by one or more pumps 40 (Fig. 4).

Depending on the circumstances, it may be advantageous to include one or more supplemental loop circuits 50, to provide additional heating or cooling, as the case may be. Accordingly, in one embodiment, the heat exchange system 20 preferably also includes one or more supplemental loop circuits 50 in which a supplemental heat exchange medium 52 is circulatable, for heat exchange between the supplemental heat exchange medium and the heat exchange fluid in the heat exchanger. As can be seen in Fig. 4, a pump 54 preferably causes the supplemental heat exchange medium to circulate through the supplemental loop circuit 50. It will be appreciated by those skilled in the art that the supplemental loop circuit 50 may be any one or more of a variety of loop circuits, intended to provide an additional transfer of heat between the heat exchange fluid and the supplemental heat exchange medium, to supplement the heat exchange effects of the heat exchange medium in the ground loop circuit 38. For example, in claim 1, the supplemental loop circuit 50 preferably includes a down-hole segment 56, as is known. Those skilled in the art would be aware of various other configurations (e.g., instead of the vertical loop 56, the supplemental loop circuit 50 may be one or more substantially horizontal loops) which may be used to provide additional heat exchange with the ground material. Alternatively, the supplemental loop circuit 50 may utilize another heat source, e.g., the supplemental loop circuit 50 may be a solar thermal system. It will be understood that the supplemental loop circuit 50 is shown in the drawings as a vertical loop system only for convenience.

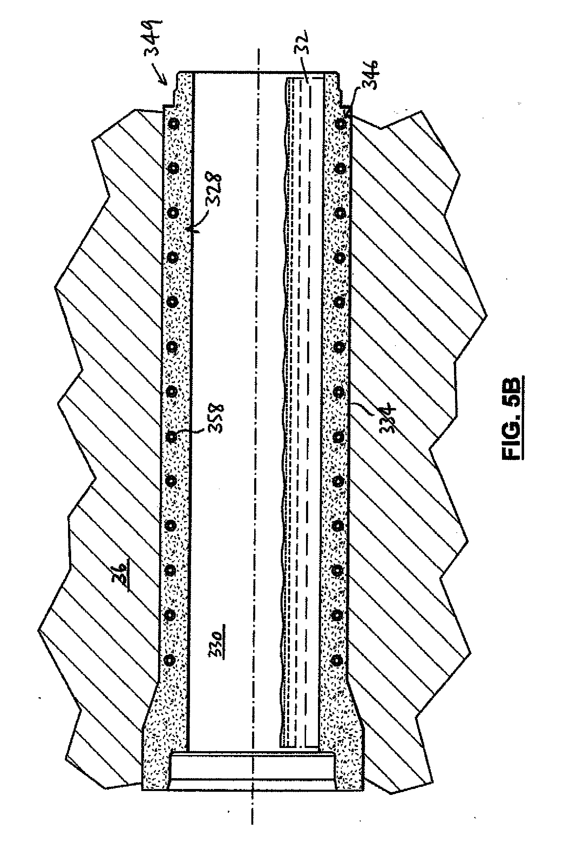

The pipe body 28 preferably is made of any suitable material. In one embodiment, it is preferred that the pipe body 28 includes reinforced concrete. As can be seen in Fig. 5, the pipe portion 46 preferably includes an embedded part 58 which is positioned in the pipe body 28. Preferably, the pipe body 28 includes one or more internal wall portions 60 positioned between the embedded part 58 and the conduit 30, the internal wall portion 60 being adapted for thermal conductivity therethrough. In addition, the pipe body preferably includes one or more external wall portions 62 including the exterior surface 34 and positioned between the embedded part 58 and the ground material 36. The external wall portion 62 preferably is adapted for thermal conductivity therethrough.

The ground loop circuit 38 preferably includes tubing made of any suitable material(s), and suitable fastening means 63 as may be required to connect parts of the ground loop circuit together. As those skilled in the art would be aware of such suitable fastening means, further description thereof is unnecessary.

The end portion(s) 44 and the pipe portions 46 may be, for example, made of high-density polyethylene (HDPE) tubing. The inner diameter of tubing is determined by a number of factors. It has been found that HDPE tubing with an inner diameter of about 19.05 mm. (3/4 inch) and an outer diameter of about 25.4 mm. (1 inch) is suitable, e.g., where the wall thickness is about 76.2 mm. (3 inches). (Those skilled in the art will appreciate that, in a larger pipe body with a thicker wall, larger tubing may be preferred.) The connecting portion 48 preferably is at least partially made of cross-linked polyethylene ("PEX") tubing, or it may be HDPE tubing.

The heat exchange medium preferably is any suitable liquid or mixture of liquids, as would be known to those skilled in the art. For example, a mixture of water and antifreeze (e.g., propylene glycol, denatured alcohol, or methanol) has been found to be suitable. Any suitable mixture may be used. For instance, the antifreeze/water mixture may be between 30% and 50% (i.e., 30% by weight antifreeze to 50% by weight antifreeze). (As is known, the mixture with higher antifreeze content has less heat storage capacity.) The supplemental heat exchange medium also preferably is any suitable liquid(s), e.g., a mixture of water and antifreeze.

Similarly, the heat exchange fluid preferably is any suitable refrigerant (e.g., for use in a vapor-compression cycle), as is known in the art.

As noted above, the pipe body 28 preferably is made of reinforced concrete. As can be seen in Figs. 3B and 5A, the pipe body 28 preferably includes a rebar cage 64 which is positioned generally inside the pipe body 28. The rebar cage 64 preferably is made of any suitable rebar material, as is known in the art. In one embodiment, the embedded part 58 of the pipe portion 46 preferably is attached to the rebar cage 64.

It is also preferred that the embedded part 58 of the pipe portion 46 is positioned substantially in a wall 66 of the pipe body 28. For example, as shown in Fig. 5A, the embedded part 58 preferably is sized and positioned so that the embedded part 58 is substantially equidistant from the exterior surface 34 and the conduit 30. For example, the thickness (designated "T", in Fig. 5A) of the wall 66 may be about 76.2 mm. (3 inches). Where the embedded part has an outer diameter of about 25.4 mm. (1 inch), therefore, the internal wall portion 60 and the external wall portion 62 preferably are each about 25.4 mm. (1 inch) thick. It is preferred that the embedded part 58 be positioned substantially in the wall 66 in order to provide the pipe assembly 49 with somewhat improved structural strength. For instance, if the embedded part were only partly embedded and positioned for direct engagement with the ground material and/or the fluid in the conduit, the pipe assembly in which such partly embedded tubing is positioned would tend to have less structural strength overall. Because concrete typically has relatively good thermal conductivity (e.g., typically between about 1.7 to about 2.0 Watts per Kelvin per meter), it is thought that the improved structural strength resulting from embedding the embedded part in the wall is, on balance, advantageous, notwithstanding that the heat transfer between the ground material and the heat exchange medium is via the external wall portion 62, and the heat transfer between the fluid in the conduit and the heat exchange medium is via the internal wall portion 60.

It appears that the density of the concrete of the pipe body affects the thermal conductivity thereof with a higher density tending to result in a correspondingly higher thermal conductivity.

As can be seen, for example, in Fig. 5A, the pipe body 28 preferably has a generally conventional form in which the wall 66 is included in a substantially cylindrical main portion 68 of the pipe body 28 which is integrally formed with a flange portion 70. The main (cylindrical) portion 68 includes an end part 71 (Fig. 5A). As is well known in the art, the flange portion 70 is adapted to receive the end part of the main portion of a first adjacent pipe body (not shown in Fig. 5A). Similarly, the end part 71 is adapted to be received in the flange portion of a second adjacent pipe body (not shown in Fig. 5A), preferably with a conventional gasket (not shown) thereon.

It will be appreciated by those skilled in the art that the materials used in the pipe body 28, and the positioning of the pipe portion 46 relative to the pipe body 28, preferably are selected according to various factors, including cost, structural strength, and thermal conductivity. For example, instead of reinforced concrete, the pipe body may be made of any suitable plastic material. However, and as noted above, a number of factors should be considered, e.g., cost; thermal conductivity; structural strength.

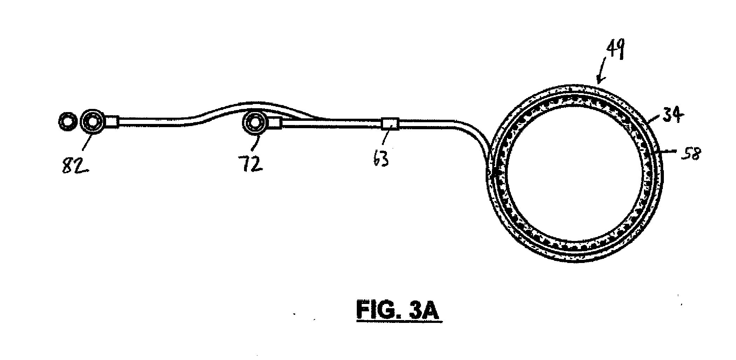

As can be seen in Fig. 2, the embedded part 58 of the pipe portion 46 preferably is positioned in the pipe wall in the main portion 68 to describe a generally helical path. In Figs. 3A and 3B, the embedded part 58 is shown positioned around the conduit for illustrative purposes. Also, only a part (identified as "M" in Fig. 3B) of the embedded part 58 is shown as a cross-section in Fig. 3B, for illustrative clarity.

In use, the heat exchange medium is pumped through an outflow part 72 of the connecting portion 48 to which pipe portions 46 are connected. In Fig. 4, the pipe portions shown are designated 46A-46F for convenience. Each pipe portion 46 includes an inlet part 74 and an outlet part 76 connected to the embedded part 58 thereof. It will be appreciated by those skilled in the art that various arrangements of the pipe portions 46 relative to each other and to the connecting portion 48 are possible. As can be seen in Fig. 4, for example, the outlet part 76A is connected to an inlet part 74B, and the outlet part 76B is connected to a return part 78 of the connecting portion 48.

As can be seen in Fig. 2, the heat transfer medium is pumped from the end portion 44 (Fig. 4) through the outflow part 72 of the connecting portion 48 (as indicated by arrow "A" in Fig. 2) to the inlet part 74 of the pipe portion 46 (as indicated by arrow "B"). For clarity, the pipe portions in Fig. 2 are designated 46X - 46Z. (As described below, it is not necessary that certain of the pipe portions are connected in series, e.g., pipe portions 46X and 46Y. Fig. 2 includes the pipe portions 46X and 46Y connected in series for clarity of illustration.) The heat transfer medium flows through the embedded part 58X of the pipe portion 46X in the direction generally indicated by arrow "C" to the outlet part 76X of the pipe portion 46X. The outlet part 76X is connected to the inlet part 74Y (i.e., the pipe portions 46X, 46Y are connected in series), and the heat transfer medium flows through the outlet part 76X and into the inlet part 74Y, as indicated by arrows "D" and "E" respectively.

The pipe portion 46Z is connected in parallel with the pipe portions 46X, 46Y relative to the connecting portion 48. The heat transfer medium exists the pipe portion 46Z via the outlet part 76Z (as indicated by arrow "F") to move the return part 78 of the connecting portion 48, so that the heat transfer medium from the pipe portion 46Z is then returned to the end portion 44, for heat transfer with the heat transfer fluid in the heat exchanger 24 (Fig. 4). Movement of the heat transfer medium through the return part 78 is in the direction indicated by arrow "G" in Fig. 2.

As can be seen in Fig. 4, the heat exchange system 20 preferably includes a number of pipe bodies 28A-28F connected end-to-end for substantial alignment of the conduits 30A-30F therein, each pipe body being connected to at least an adjacent one of the pipe bodies. The heat exchange system 20 preferably also includes a number of pipe portions 46A-46F, each of the pipe portions being at least partially engaged with one of the pipe bodies respectively. The pipe portions are connected to form a number of groups 80A-80C. In particular, each group 80 includes at least a first selected one of the pipe portions engaged with the first selected one of the pipe bodies connected in series to at least a second selected one of the pipe portions engaged with a second selected one of the pipe bodies adjacent thereto. Each group 80 of pipe portions 46 is respectively connected to the connecting portion 48 in parallel.

As an example, in Fig. 4, the pipe portions 46A-46F are, for illustrative purposes, shown as being arranged to form three groups 80A-80C. The pipe portion 46A is connected in series to the pipe portion 46B, to form the group 80A. The group 80A is connected to the connecting portion 48 in parallel. Specifically, the group 80A is connected to the outflow part 72 via the inlet part 74A, and the group 80A is also connected to the return part 78 of the connecting portion 48 via the outlet part 76B. In the group 80A, the first selected one of the pipe portions is the pipe portion 46A, and it is engaged with the pipe body 28A. The second selected one of the pipe portions is 46B, and it is engaged with the second selected one of the pipe bodies, i.e., the pipe body 28B.

The purpose of connecting pipe portions in series, to form groups, is to improve the efficiency of heat transfer between the heat transfer medium in the embedded part and the ground material, and between such heat transfer medium and the fluid in the conduit. In the arrangement illustrated in Fig. 4, because the pipe portions are connected in series (i.e., in series of two pipe portions each) the heat exchange medium is allowed the benefit of heat exchange to a greater extent than would be the case if, for example, each pipe portion were connected to the connecting portion in parallel. It will be understood that any number of pipe portions 46 may be connected in series to define a group.

As described above, for the heat transfer medium flowing through the embedded part 58 in each pipe portion 46, the heat source (or heat sink, as the case may be) is both the ground material 36 and the fluid 32 flowing through the conduit 30. (For the purpose hereof, the ground material 36 and the fluid 32 are collectively referred to as the "Heat Source", regardless of whether used as a heat source or a heat sink.) For example, referring to Fig. 4, when the heat transfer medium flows through embedded part 58A in the pipe portion 46A, heat is transferred between the Heat Source and the heat transfer medium in the embedded part 58A if a temperature difference (AT) exists therebetween. In most cases, there is a ΔT between the heat transfer medium in the embedded part 58A and the Heat Source, and as a result, the temperature of the heat transfer medium rises as the heat transfer medium flows through the embedded part 58A.

It can be seen, therefore, that connection the pipe portions in series (e.g., the pipe portions 46A and 46B as shown in Fig. 4) is beneficial, because this results in the heat transfer medium being brought to a higher temperature (or a lower temperature, as the case may be) than would be the case if the heat transfer medium were passed through only one pipe portion before the heat transfer medium is returned to the connecting portion 48, to be moved ultimately to the end portion 44. The warmed (or cooled) heat transfer medium from the first pipe portion (e.g. 46A) is warmed (or cooled) further when passed through the next pipe portion (e.g. 46B) to which the first pipe portion is connected in series.

However, those skilled in the art will appreciate that, at a certain point, the advantage gained by connecting the pipe portions in series disappears. This happen when the ΔT between the temperature of the heat transfer medium and the Heat Source disappears, i.e., when the ΔT approaches zero. At that point, the heat transfer medium should be returned to the connecting portion 48 via the outlet part (e.g., 76B, in Fig. 4) because no further benefit can be obtained, i.e., by directing the warmed (or cooled) heat transfer medium through another pipe portion in series. Those skilled in the art will appreciate that the optimum arrangement of connections for the pipe portions vary according to a number of factors including, in particular, local conditions, e.g., the temperatures of the ground and the fluid. It appears that one optimum arrangement is that shown in Fig. 4, i.e., only two pipe portions are connected in series to define a group, and the groups are connected to the connecting portion in parallel.

It will be understood that the pipe assemblies 49 are installed so that the conduits 30 defined therein are positioned at an appropriate grade relative to the horizontal. Such grade preferably is in accordance with the grade at which a prior art pipe is installed, as is well known in the art. It will be understood that the pipe assemblies 49 illustrated in Fig. 4 are positioned at an appropriate grade so that the end thereof identified as "H₁" is at a higher elevation than the end thereof identified as "H₂", i.e., the fluid 32 flows through the conduits 30 in the direction indicated by arrow "J" in Fig. 4.

It can be seen, in Figs. 2 and Fig. 4, that the heat transfer medium flows through the pipe portions 46 as illustrated generally from right to left, i.e., in the direction indicated by arrow "K" in Fig. 4. Where it is desired to transfer heat from the fluid 32 in the conduits 30 to the heat transfer medium, this arrangement provides an advantage because the fluid moving through the conduits is cooled as it moves in the direction indicated by arrow "J" in Fig. 4. As the arrangement is presented in Fig. 4, the fluid (not shown in Fig. 4) is warmer on the left than it is on the right. However, the heat transfer medium generally moves through each pipe portion from right to left, as illustrated in Fig. 4. This means that the heat transfer medium is moved toward warmer fluid, for heat exchange therewith, as the heat transfer medium is moved through the pipe portions connected in series, thereby resulting in more efficient heat transfer thereto.

Accordingly, it is believed that the arrangement illustrated in Fig. 4 (i.e., with the pipe portions of two adjacent pipe assemblies connected in series, to define a single group which is connected to the connecting portion 48 in parallel) generally provides improved performance.

Preferably, the connecting portion 28 includes one or more manifolds 82 for receiving the heat exchange medium from each group 80 from pipe portions 46 respectively at substantially the same pressure, to permit the heat exchange medium to flow into the manifold from the groups at substantially equal rates of flow.

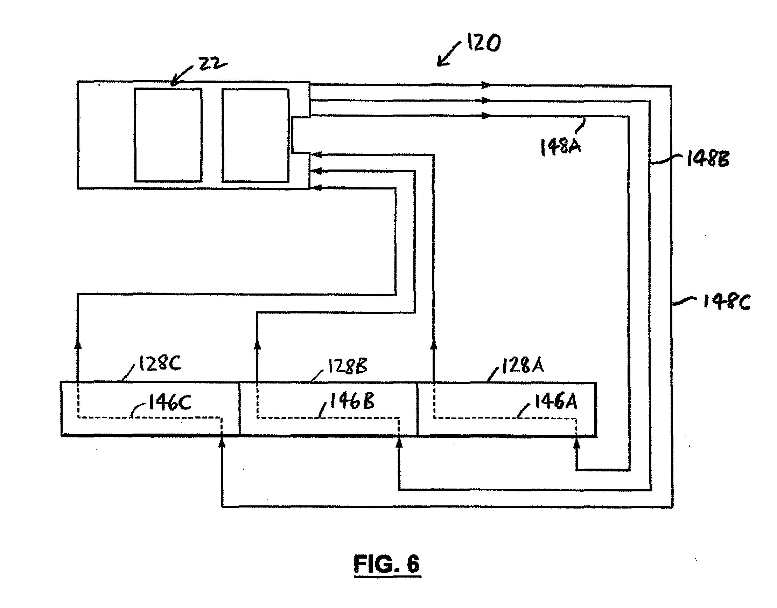

An alternative heat exchange system 120 of the invention is disclosed in Fig. 6. The heat exchange system 120 preferably includes a number of pipe bodies 128 connected end-to-end for substantial alignment of the conduits therein, each pipe body being connected to at least an adjacent one of the pipe bodies. The heat exchange system 120 preferably also includes a number of pipe portions 146. Each pipe portion 146 is at least partially engaged with one of the pipe bodies 128 respectively. (It will be understood that the pipe portions 146 preferably are positioned in the pipe bodies 128 in helical paths, or in any other suitable paths. The pipe portions 146 are not shown in helical paths in Fig. 6 to simplify the drawing.) Also, each pipe portion 146 is connected to one or more connection portions 128 in parallel.

As can be seen in Fig. 6, the system 120 includes three connecting portions 148A, 148B, and 148C. The connecting portions 148A-148C are respectively connected to pipe portions 146A-146C, which are engaged with pipe bodies 128A-128C.

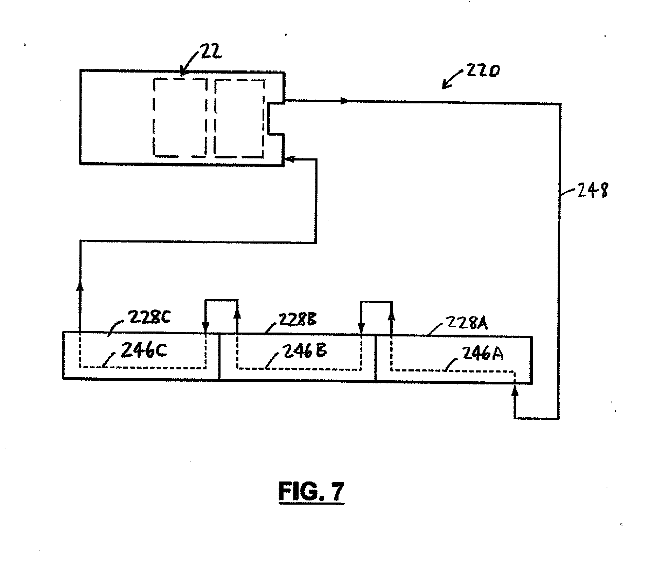

Another embodiment of the heat exchange system 220 of the invention is disclosed in Fig. 7. The heat exchange system 220 preferably includes a number of pipe bodies 228 connected end-to-end for substantial alignment of the conduits therein, each pipe body being connected to at least an adjacent one of the pipe bodies. The system also includes a number of pipe portions 246, each of the pipe portions 246 being at least partially engaged with one of the pipe bodies 228 respectively. (It will be understood that the pipe portions 246 preferably are positioned in the pipe bodies 228 in helical paths, or in any other suitable paths. The pipe portions 246 are not shown in helical paths in Fig. 6 to simplify the drawing.) Each pipe portion 246 is connected in series to the pipe portion engaged with the adjacent pipe bodies.

As can be seen in Fig. 7, the heat exchange system 220 includes one connecting portion 248, and each of the pipe portions 246A-246C is connected in series. The pipe portion 246A is connected in series with pipe portion 246B, for example.

An alternative embodiment of the pipe assembly 349 of the invention is shown in Fig. 5B. Preferably, the pipe body 328 includes concrete, i.e., the pipe body 328 preferably does not include rebar. As can be seen in Fig. 5B, the embedded part 358 of the pipe portion 346 preferably is positioned in the wall 366 substantially equidistant from the exterior surface 334 and the conduit 330.

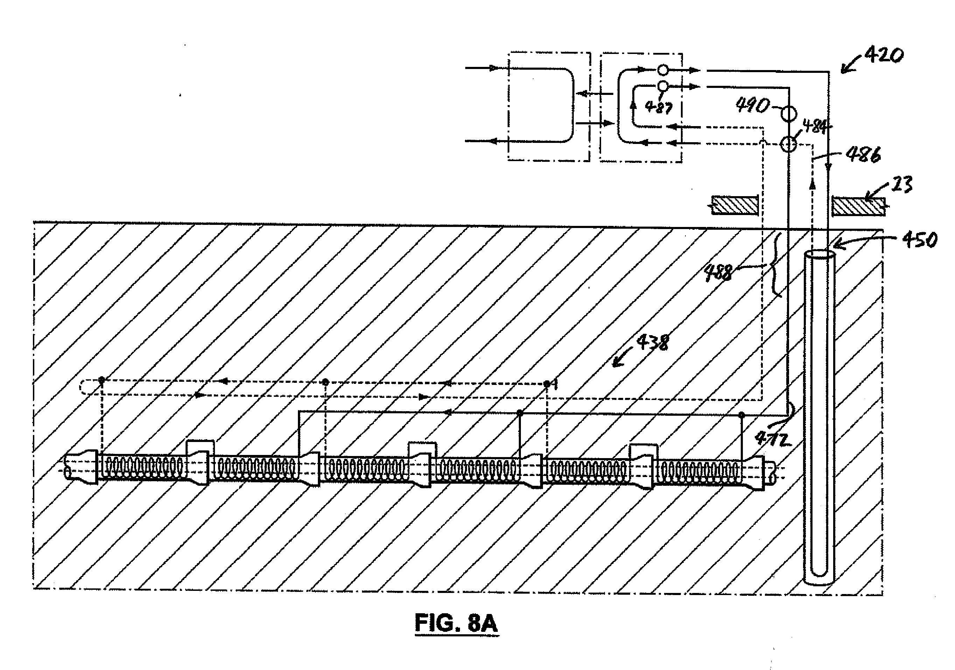

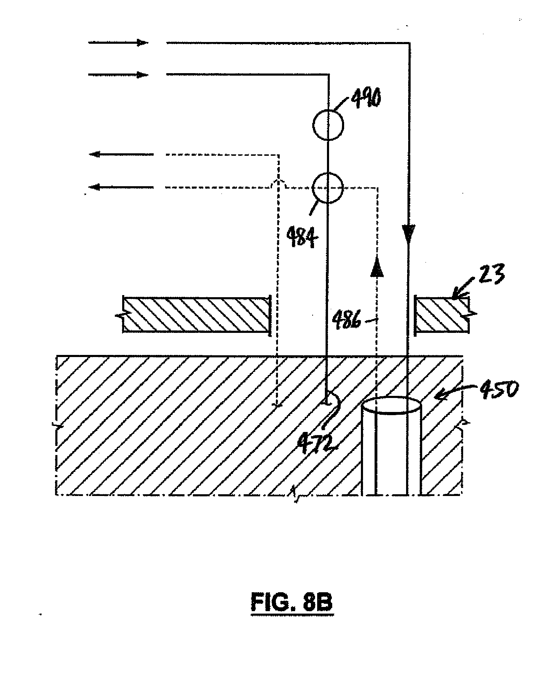

Another embodiment of the heat exchange system 420 of the invention is disclosed in Fig. 8A. Preferably, the heat exchange system includes a three-way valve 484 which provides a connection as required between the ground loop circuit 438 and the supplemental loop circuit 450. As shown in Fig. 8A, the three-way valve 484 may, for instance, be positioned at an outlet part 486, to connect the outlet part 486 with an outflow part 472 of the ground loop circuit 438.

On occasion, the flow of the heat transfer medium through the outflow part 472 is impeded by frost which can build up inside the outflow part 472. Such frost build-up typically takes place in a region at or close to the ground surface, generally identified for illustrative purposes as 488 in Fig. 8A. The heat exchange system 420 preferably includes a temperature sensor 490 which senses temperature in the relevant region 488 of the outflow part 472. If the temperature sensor determines that the temperature in the region 488 of the outflow part 472 is sufficiently below freezing, the sensor 490 generates a signal which is used to activate the three-way valve 484, to cause the outlet part 486 to be connected outflow part 472. A variable speed pump 487 is also activated by the signal, drawing relatively warmer heat transfer medium from the outlet part 486 into the outflow part 472, resulting in the melting and removal of the frost build-up.

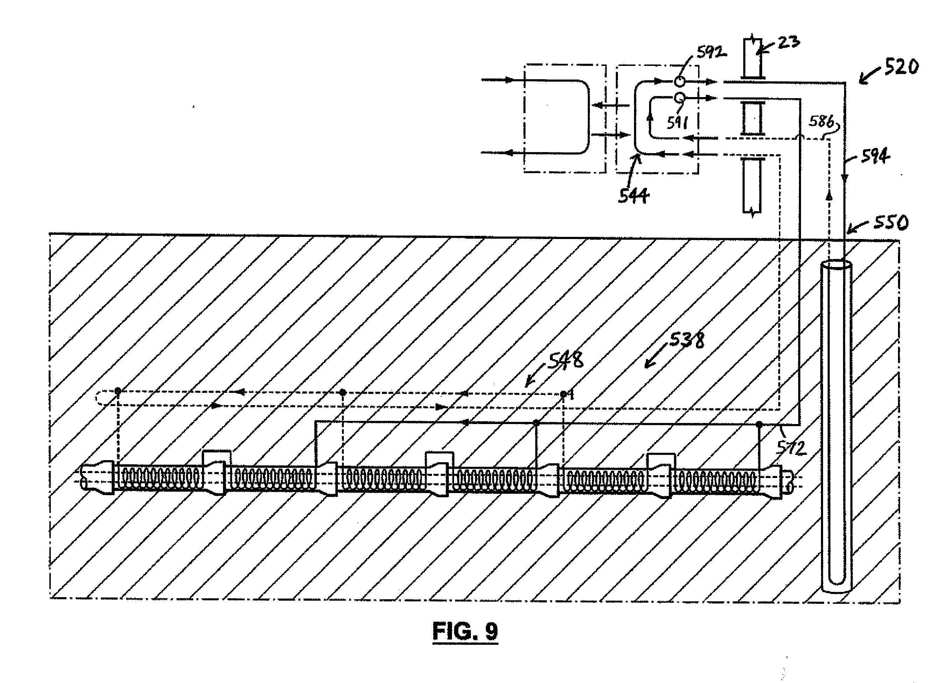

Another embodiment of the heat exchange system 520 is shown in Fig. 9. The heat exchange system 520 is generally similar to the heat exchange system 20 shown in Fig. 4, except that the ground loop circuit 538 and the supplemental loop circuit 550 are interconnected. As can be seen in Fig. 9, heat transfer medium exiting the supplemental loop circuit 550 via the outlet part 586 passes through the pump 591 which causes the heat transfer medium to flow into the ground loop circuit 538 via the outflow part 572. The heat transfer medium flows from the connecting portion 548 to the end portion 544, and through the pump 592. The pump 592 directs the heat transfer medium to the supplemental loop circuit 550 via the inlet part 594 thereof.

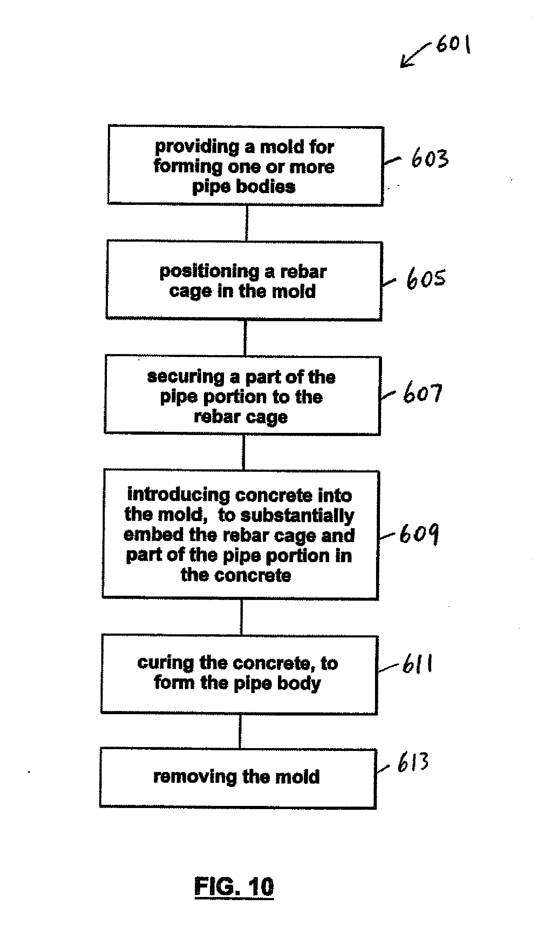

The invention also includes a method 601 which begins with a first step 603 of providing a mold for forming one or more pipe bodies (Fig. 10). Next, the rebar cage 64 is positioned in the mold (step 605). At least a part of the pipe portion is secured to the rebar cage (step 607). Next, concrete is introduced into the mold to substantially embed the rebar cage and the part of the pipe portion attached to the rebar cage in the concrete (step 609). The concrete is then cured to form the pipe body (step 611). Finally, the mold is removed (step 613).

It will be appreciated by those skilled in the art that the invention can take many forms, and that such forms are within the scope of the invention as described above. The foregoing descriptions are exemplary, and their scope should not be limited to the embodiments referred to therein.

## Claims

1. A heat exchange system comprising:
a heat pump assembly for controlling an indoor fluid's temperature comprising a heat exchanger having a heat exchange fluid circulatable therein;
at least one elongate pipe body defining at least one conduit therein in which at least one fluid is receivable, said at least one pipe body comprising an exterior surface adapted for engagement with ground material;
at least one ground loop circuit in fluid communication with at least one pump, for circulating a heat transfer medium through said at least one ground loop circuit;
said at least one ground loop circuit comprising:
at least one end portion positioned proximal to the heat exchanger for heat exchange between the heat transfer medium in said at least one end portion and the heat exchange fluid in the heat exchanger;
at least one pipe portion at least partially engaged with said at least one pipe body;
at least one connecting portion connecting said at least one pipe portion and said at least one end portion; and
said at least one pipe portion being at least partially located proximal to said at least one conduit for heat exchange between said at least one fluid in said at least one conduit and the heat exchange medium in said at least one pipe portion and said at least one pipe portion being at least partially located proximal to the exterior surface for heat exchange between the ground material and the heat exchange medium in said at least one pipe portion.

2. A heat exchange system according to claim 1 in which said at least one connecting portion is at least partially engaged with the ground material for heat exchange between the ground material and the heat exchange medium in said at least one connecting portion.

3. A heat exchange system according to claim 1 or 2 comprising:
a plurality of pipe bodies connected end-to-end for substantial alignment of the conduits therein, each said pipe body being connected to at least an adjacent one of said pipe bodies;
a plurality of pipe portions, each said pipe portion being at least partially engaged with one of the pipe bodies respectively; and
each said pipe portion being connected to said at least one connecting portion in parallel.

4. A heat exchange system according to claim 1 or 2 comprising:
a plurality of pipe bodies connected end-to-end for substantial alignment of the conduits therein, each said pipe body being connected to at least an adjacent one of said pipe bodies;
a plurality of pipe portions, each of the pipe portions being at least partially engaged with one of the pipe bodies respectively; and
each said pipe portion being connected in series to said pipe portion engaged with said at least one adjacent pipe body.

5. A heat exchange system according to claim 1 or 2 comprising:
a plurality of pipe bodies connected end-to-end for substantial alignment of the conduits therein, each said pipe body being connected to at least an adjacent one of said pipe bodies;
a plurality of pipe portions, each said pipe portion being at least partially engaged with one of the pipe bodies respectively;
said pipe portions being connected to form a plurality of groups, each said group comprising at least a first selected one of said pipe portions engaged with a first selected one of said pipe bodies connected in series to at least a second selected one of said pipe portions engaged with a second selected one of said pipe bodies adjacent thereto; and
each said group of said pipe portions being respectively connected to said at least one connecting portion in parallel.

6. A heat exchange system according to claim 5 in which said at least one connecting portion comprises at least one manifold for receiving the heat exchange medium from each said group of said pipe portions respectively at substantially the same pressure, to permit the heat exchange medium to flow into said at least one manifold from said groups at substantially equal rates of flow.

7. A heat exchange system according to any of the preceding claims additionally comprising at least one supplemental loop circuit in which a supplemental heat exchange medium is circulatable, for heat exchange between said supplemental heat exchange medium and the heat exchange fluid in the heat exchanger.

8. A heat exchange system according to any of the preceding claims in which said at least one pipe body comprises reinforced concrete.

9. A pipe assembly comprising:
at least one pipe body defining at least one conduit therein in which at least one fluid is receivable, said at least one pipe body comprising an exterior surface adapted for engagement with ground material;
at least one pipe portion through which a heat transfer medium is circulatable; and
said at least one pipe portion being at least partially engaged with said at least one pipe body and being at least partially located proximal to said at least one conduit for heat exchange between said at least one fluid in said at least one conduit and the heat exchange medium in the pipe portion, and said at least one pipe portion being at least partially located proximal to the exterior surface for heat exchange between the heat exchange medium in the pipe portion and the ground material.

10. A pipe assembly according to claim 9 in which said at least one pipe portion includes an embedded part positioned in said at least one pipe body.

11. A pipe assembly according to claim 10 in which said at least one pipe body comprises at least one internal wall portion positioned between the embedded part and said at least one conduit, said at least one internal wall portion being adapted for thermal conductivity therethrough.

12. A pipe assembly according to claim 10 or 11 in which said at least one pipe body comprises at least one external wall portion comprising the exterior surface and positioned between the embedded part and the ground material, said at least one external wall portion being adapted for thermal conductivity therethrough.

13. A pipe assembly according to any of claims 9 to 12 in which said at least one pipe body comprises reinforced concrete.

14. A method of forming the pipe assembly according to claim 9 comprising:
(a) providing a mold for forming said at least one pipe body;
(b) positioning a rebar cage in the mold;
(c) securing at least a part of said at least one pipe portion to the rebar cage;
(d) introducing concrete into the mold, to substantially embed the rebar cage and the part of said at least one pipe portion in the concrete;
(e) curing the concrete, to form said at least one pipe body; and
(f) removing the mold.
